(19) **Europäisches Patentamt / European Patent Office / Office européen des brevets**

(11) **EP 4 460 000 A1**

(12) **EUROPEAN PATENT APPLICATION**
published in accordance with Art. 153(4) EPC

(43) Date of publication:
**06.11.2024 Bulletin 2024/45**

(21) Application number: **22916689.7**

(22) Date of filing: **27.12.2022**

(51) International Patent Classification (IPC):
**H04N 19/513** $^{(2014.01)}$   **H04N 19/105** $^{(2014.01)}$
**H04N 19/176** $^{(2014.01)}$   **H04N 19/70** $^{(2014.01)}$

(52) Cooperative Patent Classification (CPC):
**H04N 19/105; H04N 19/176; H04N 19/513;**
**H04N 19/577; H04N 19/70**

(86) International application number:
**PCT/KR2022/021374**

(87) International publication number:
**WO 2023/128548 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 KR 20210190261**

(71) Applicant: **KT Corporation
Seongnam-si, Gyeonggi-do 13606 (KR)**

(72) Inventor: **LIM, Sung Won
Seongnam-si, Gyeonggi-do 13606 (KR)**

(74) Representative: **Schmitt-Nilson Schraud Waibel
Wohlfrom
Patentanwälte Partnerschaft mbB
Pelkovenstraße 143
80992 München (DE)**

(54) **VIDEO SIGNAL ENCODING/DECODING MEHOD, AND RECORDING MEDIUM ON WHICH BITSTREAM IS STORED**

(57)   An image decoding method according to the present disclosure comprises the steps of: generating a motion vector prediction list for the current block; selecting one from a plurality of motion vector prediction candidates included in the motion information prediction list; restoring a motion vector differential value of the current block; and adding the motion vector prediction candidate and the motion vector differential value so as to derive a motion vector of the current block. A code of the motion vector differential value can be determined on the basis of code prediction information indicating whether a predicted code matches an actual code.

【FIG. 7】

```
┌────────────────────────────────────────────┐
│   Derive motion vector candidate for sign    │ ─── S710
│ combination of motion vector difference value│
└────────────────────────────────────────────┘
                      │
                      ▼
┌────────────────────────────────────────────┐
│      Calculate cost of reference region      │ ─── S720
│      indicated by motion vector candidate    │
└────────────────────────────────────────────┘
                      │
                      ▼
┌────────────────────────────────────────────┐
│  Encode sign prediction information indicating│ ─── S730
│  whether prediction sign matches actual sign │
└────────────────────────────────────────────┘
```

**EP 4 460 000 A1**

**Description**

[Technical Field]

The present disclosure relates to a method and a device for processing a video signal.

[Background Art]

Recently, demands for high-resolution and high-quality images such as HD(High Definition) images and UHD(Ultra High Definition) images have increased in a variety of application fields. As image data becomes high-resolution and high-quality, the volume of data relatively increases compared to the existing image data, so when image data is transmitted by using media such as the existing wire and wireless broadband circuit or is stored by using the existing storage medium, expenses for transmission and expenses for storage increase. High efficiency image compression technologies may be utilized to resolve these problems which are generated as image data becomes high-resolution and high-quality.

There are various technologies such as an inter prediction technology which predicts a pixel value included in a current picture from a previous or subsequent picture of a current picture with an image impression technology, an intra prediction technology which predicts a pixel value included in a current picture by using pixel information in a current picture, an entropy encoding technology which assigns a short sign to a value with high appearance frequency and assigns a long sign to a value with low appearance frequency and so on, and image data may be effectively compressed and transmitted or stored by using these image compression technologies.

On the other hand, as demands for a high-resolution image have increased, demands for stereo-scopic image contents have increased as a new image service. A video compression technology for effectively providing high-resolution and ultra high-resolution stereo-scopic image contents has been discussed.

[Disclosure]

[Technical Problem]

The present disclosure is to provide a method for determining a sign of a motion vector difference value without signaling sign information of a motion vector difference value and a device for performing the same.

The present disclosure is to provide a method for using sign prediction information encoded by context coding instead of sign information encoded by bypass coding and a device for performing the same.

Technical effects of the present disclosure may be non-limited by the above-mentioned technical effects, and other unmentioned technical effects may be clearly understood from the following description by those having ordinary skill in the technical field to which the present disclosure pertains.

[Technical Solution]

An image decoding method according to the present disclosure includes generating a motion vector prediction list for a current block, selecting one from a plurality of motion vector prediction candidates included in the motion information prediction list, reconstructing a motion vector differential value of the current block and adding the motion vector prediction candidate and the motion vector differential value so as to derive a motion vector of the current block. In this case, a sign of the motion vector difference value may be determined based on sign prediction information indicating whether a predicted sign matches an actual sign.

According to an image decoding method according to the present disclosure may include generating a motion vector prediction list for a current block, selecting one from a plurality of motion vector prediction candidates included in the motion information prediction list, deriving a motion vector differential value by subtracting a motion vector prediction candidate from a motion vector of the current block, deriving a prediction sign for the motion vector difference value, and encoding sign prediction information indicating whether an actual sign of the motion vector difference value matches the prediction sign.

In an image encoding/decoding method according to the present disclosure, motion vector candidates may be derived by applying each sign combination of the motion vector difference value, a reference region within a reference picture may be designated based on each of the motion vector candidates, and the predicted sign may correspond to a sign combination used to derive a reference region with the smallest cost among a plurality of reference regions.

In an image encoding/decoding method according to the present disclosure, the reference region is a reference template adjacent to a reference block indicated by a motion vector candidate, and a cost for the reference region may be obtained by applying a Sum of Difference (SAD) to the reference template and a current template adjacent to the current block.

In an image encoding/decoding method according to the present disclosure, the reference region is a L0 reference block indicated by a motion vector candidate, and a cost for the reference region may be obtained by applying a SAD to the L0 reference block and a L1 reference block corresponding to the L0 reference block.

In an image encoding/decoding method according to the present disclosure, if a reference region indicated by a motion vector candidate is out of a boundary of a reference picture, the motion vector candidate may be determined to be unavailable.

In an image encoding/decoding method according to the present disclosure, the sign prediction information may be decoded based on probability information.

In an image encoding/decoding method according to the present disclosure, the probability information may be determined based on a sign of a motion vector difference value in a direction to which sign prediction is not applied among a L0 direction and a L1 direction.

In an image encoding/decoding method according to the present disclosure, the sign prediction information may be signaled for each of a horizontal direction and a vertical direction.

In an image encoding/decoding method according to the present disclosure, the motion vector, the motion vector prediction candidate, and the motion vector difference value may be related to a control point motion vector of the current block.

The features briefly summarized above with respect to the present disclosure are just an exemplary aspect of a detailed description of the present disclosure described below, and do not limit a scope of the present disclosure.

[Technical Effect]

According to the present disclosure, a sign of a motion vector difference value may be determined even without using sign information.

According to the present disclosure, encoding/decoding efficiency may be improved by replacing a bin encoded by bypass coding with a bin encoded by context coding.

Effects obtainable from the present disclosure are not limited to the above-mentioned effects and other unmentioned effects may be clearly understood from the following description by those having ordinary skill in the technical field to which the present disclosure pertains.

[Brief Description of Drawings]

FIG. 1 is a block diagram showing an image encoding device according to an embodiment of the present disclosure.
FIG. 2 is a block diagram showing an image decoding device according to an embodiment of the present disclosure.
FIG. 3 shows an example in which motion estimation is performed.
FIGS. 4 and 5 show an example in which a prediction block of a current block is generated based on motion information generated through motion estimation.
FIG. 6 shows a position referred to in order to derive a motion vector prediction value.
FIG. 7 shows an encoding method for predicting a sign of a motion vector difference value.
FIG. 8 shows a decoding method to which sign prediction of a motion vector difference value is applied.
FIG. 9 is a diagram showing motion vector candidates.
FIG. 10 shows a reference template for each motion vector candidate in a reference picture.
FIG. 11 is a diagram for describing an unavailable reference template.
FIG. 12 is a diagram for describing an example in which a cost is calculated based on bidirectional matching.
FIG. 13 is a diagram for describing an example in which a motion vector is allocated to each sub-block.

[Best Mode]

As the present disclosure may make various changes and have several embodiments, specific embodiments will be illustrated in a drawing and described in detail. But, it is not intended to limit the present disclosure to a specific embodiment, and it should be understood that it includes all changes, equivalents or substitutes included in an idea and a technical scope for the present disclosure. A similar reference numeral was used for a similar component while describing each drawing.

A term such as first, second, etc. may be used to describe various components, but the components should not be limited by the terms. The terms are used only to distinguish one component from other components. For example, without going beyond a scope of a right of the present disclosure, a first component may be referred to as a second component and similarly, a second component may be also referred to as a first component. A term of and/or includes a combination of a plurality of relative entered items or any item of a plurality of relative entered items.

When a component is referred to as being "linked" or "connected" to other component, it should be understood that it may be directly linked or connected to that other component, but other component may exist in the middle. On the other hand, when a component is referred to as being "directly linked" or "directly connected" to other component, it should be understood that other component does not exist in the middle.

As terms used in this application are just used to describe a specific embodiment, they are not intended to limit the present disclosure. Expression of the singular includes expression of the plural unless it clearly has a different meaning contextually. In this application, it should be understood that a term such as "include" or "have", etc. is to designate the existence of characteristics, numbers, steps, motions, components, parts or their combinations entered in the specification, but is not to exclude a possibility of addition or existence of one or more other characteristics, numbers, steps, motions, components, parts or their combinations in advance.

Hereinafter, referring to the attached drawings, a desirable embodiment of the present disclosure will be described in more detail. Hereinafter, the same reference numeral is used for the same component in a drawing and an overlapping description for the same component is omitted.

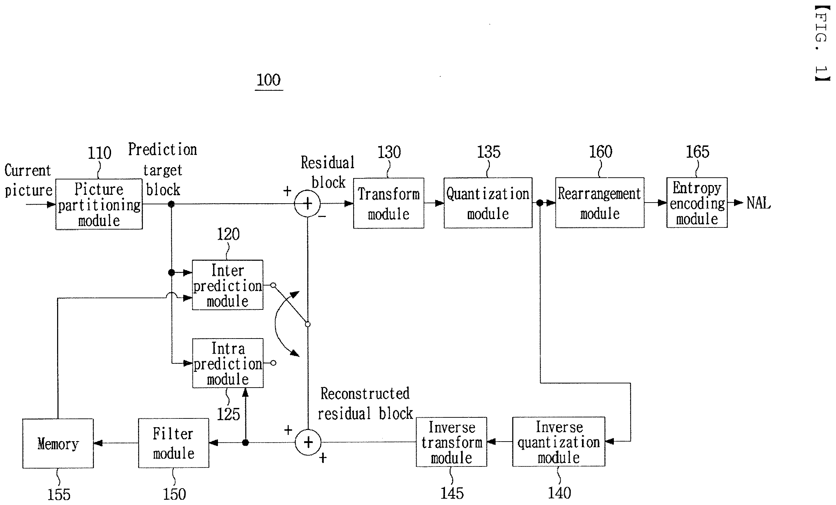

FIG. 1 is a block diagram showing an image encoding device according to an embodiment of the present disclosure.

Referring to FIG. 1, an image encoding device 100 may include a picture partitioning unit 110, prediction units 120 and 125, a transform unit 130, a quantization unit 135, a rearrangement unit 160, an entropy encoding unit 165, a dequantization unit 140, an inverse-transform unit 145, a filter unit 150, and a memory 155.

As each construction unit shown in FIG. 1 is independently shown to represent different characteristic functions in an image encoding device, it does not mean that each construction unit is constituted by separated hardware or one software unit. That is, as each construction unit is included by being enumerated as each construction unit for convenience of a description, at least two construction units of each construction unit may be combined to constitute one construction unit or one construction unit may be partitioned into a plurality of construction units to perform a function, and even an integrated embodiment and a separated embodiment of each construction unit are also included in a scope of a right of the present disclosure unless they are departing from the essence of the present disclosure.

Further, some components may be just an optional component for improving performance, not a necessary component which perform an essential function in the present disclosure. The present disclosure may be implemented by including only a construction unit necessary for implementing the essence of the present disclosure excluding a component used to just improve performance, and a structure including only a necessary component excluding an optional component used to just improve performance is also included in a scope of a right of the present disclosure.

A picture partitioning unit 110 may partition an input picture into at least one processing unit. In this case, a processing unit may be a prediction unit (PU), a transform unit (TU) or a coding unit (CU). In a picture partitioning unit 110, one picture may be partitioned into a combination of a plurality of coding units, prediction units and transform units and a picture may be encoded by selecting a combination of one coding unit, prediction unit and transform unit according to a predetermined standard (e.g., a cost function).

For example, one picture may be partitioned into a plurality of coding units. In order to partition a coding unit in a picture, a recursive tree structure such as a quad tree, a ternary tree or a binary tree may be used, and a coding unit which is partitioned into other coding units by using one image or the largest coding unit as a route may be partitioned with as many child nodes as the number of partitioned coding units. A coding unit which is no longer partitioned according to a certain restriction becomes a leaf node. In an example, when it is assumed that quad tree partitioning is applied to one coding unit, one coding unit may be partitioned into up to four other coding units.

Hereinafter, in an embodiment of the present disclosure, a coding unit may be used as a unit for encoding or may be used as a unit for decoding.

A prediction unit may be partitioned with at least one square or rectangular shape, etc. in the same size in one coding unit or may be partitioned so that any one prediction unit of prediction units partitioned in one coding unit can have a shape and/or a size different from another prediction unit.

In intra prediction, a transform unit may be configured to be the same as a prediction unit. In this case, after partitioning a coding unit into a plurality of transform units, intra prediction may be performed per each transform unit. A coding unit may be partitioned in a horizontal direction or in a vertical direction. The number of transform units generated by partitioning a coding unit may be 2 or 4 according to a size of a coding unit.

Prediction units 120 and 125 may include an inter prediction unit 120 performing inter prediction and an intra prediction unit 125 performing intra prediction. Whether to perform inter prediction or intra prediction for a coding unit may be determined and detailed information according to each prediction method (e.g., an intra prediction mode, a motion vector, a reference picture, etc.) may be determined. In this case, a processing unit that prediction is performed may be different from a processing unit that a prediction method and details are determined. For example, a prediction method, a prediction mode, etc. may be determined in a coding unit and prediction may be performed in a prediction unit or a transform unit. A residual value (a residual block) between a generated prediction block and an original block may be input to a transform unit 130. In addition, prediction mode information, motion vector information, etc. used for prediction may be encoded with a residual value in an entropy encoding unit 165 and may be transmitted to a decoding device. When a specific encoding mode is used, an original block may be encoded as it is and transmitted to a decoding unit without generating a prediction block through prediction units 120 or 125.

An inter prediction unit 120 may predict a prediction unit based on information on at least one picture of a previous picture or a subsequent picture of a current picture, or in some cases, may predict a prediction unit based on information on some encoded regions in a current picture. An inter prediction unit 120 may include a reference picture interpolation unit, a motion prediction unit and a motion compensation unit.

A reference picture interpolation unit may receive reference picture information from a memory 155 and generate pixel information equal to or less than an integer pixel in a reference picture. For a luma pixel, a 8-tap DCT-based interpolation filter having a different filter coefficient may be used to generate pixel information equal to or less than an integer pixel in a 1/4 pixel unit. For a chroma signal, a 4-tap DCT-based interpolation filter having a different filter coefficient may be used to generate pixel information equal to or less than an integer pixel in a 1/8 pixel unit.

A motion prediction unit may perform motion prediction based on a reference picture interpolated by a reference picture interpolation unit. As a method for calculating a motion vector, various methods such as FBMA (Full search-based Block Matching Algorithm), TSS (Three Step Search), NTS (New Three-Step Search Algorithm), etc. may be used. A motion vector may have a motion vector value in a 1/2 or 1/4 pixel unit based on an interpolated pixel. A motion prediction unit may predict a current prediction unit by varying a motion prediction method. As a motion prediction method, various methods such as a skip method, a merge method, an advanced motion vector prediction (AMVP) method, an intra block copy method, etc. may be used.

An intra prediction unit 125 may generate a prediction unit based on reference pixel information which is pixel information in a current picture. Reference pixel information may be derived from selected one of a plurality of reference pixel lines. A N-th reference pixel line among a plurality of reference pixel lines may include left pixels whose x-axis difference with a top-left pixel in a current block is N and top pixels whose y-axis difference with the top-left pixel is N. The number of reference pixel lines which may be selected by a current block may be 1, 2, 3 or 4.

When a neighboring block in a current prediction unit is a block which performed inter prediction and accordingly, a reference pixel is a pixel which performed inter prediction, a reference pixel included in a block which performed inter prediction may be used by being replaced with reference pixel information of a surrounding block which performed intra prediction. In other words, when a reference pixel is unavailable, unavailable reference pixel information may be used by being replaced with at least information of available reference pixels.

A prediction mode in intra prediction may have a directional prediction mode using reference pixel information according to a prediction direction and a non-directional mode not using directional information when performing prediction. A mode for predicting luma information may be different from a mode for predicting chroma information and intra prediction mode information used for predicting luma information or predicted luma signal information may be utilized to predict chroma information.

When a size of a prediction unit is the same as that of a transform unit in performing intra prediction, intra prediction for a prediction unit may be performed based on a pixel at a left position of a prediction unit, a pixel at a top-left position and a pixel at a top position.

An intra prediction method may generate a prediction block after applying a smoothing filter to a reference pixel according to a prediction mode. According to a selected reference pixel line, whether a smoothing filter is applied may be determined.

In order to perform an intra prediction method, an intra prediction mode in a current prediction unit may be predicted from an intra prediction mode in a prediction unit around a current prediction unit. When a prediction mode in a current prediction unit is predicted by using mode information predicted from a surrounding prediction unit, information that a prediction mode in a current prediction unit is the same as a prediction mode in a surrounding prediction unit may be transmitted by using predetermined flag information if an intra prediction mode in a current prediction unit is the same as an intra prediction mode in a surrounding prediction unit, and prediction mode information of a current block may be encoded by performing entropy encoding if a prediction mode in a current prediction unit is different from a prediction mode in a surrounding prediction unit.

In addition, a residual block may be generated which includes information on a residual value that is a difference value between a prediction unit which performed prediction based on a prediction unit generated in prediction units 120 and 125 and an original block in a prediction unit. A generated residual block may be input to a transform unit 130.

A transform unit 130 may transform an original block and a residual block including residual value information in a prediction unit generated through prediction units 120 and 125 by using a transform method such as DCT (Discrete Cosine Transform), DST (Discrete Sine Transform), KLT. Whether to apply DCT, DST or KLT to transform a residual block may be determined based on at least one of a size of a transform unit, a form of a transform unit, a prediction mode in a prediction unit or intra prediction mode information in a prediction unit.

A quantization unit 135 may quantize values transformed into a frequency domain in a transform unit 130. A quantization coefficient may be changed according to a block or importance of an image. A value calculated in a quantization unit 135 may be provided to a dequantization unit 140 and a rearrangement unit 160.

A rearrangement unit 160 may perform rearrangement of a coefficient value for a quantized residual value.

A rearrangement unit 160 may change a coefficient in a shape of a two-dimensional block into a shape of a one-dimensional vector through a coefficient scan method. For example, a rearrangement unit 160 may scan a DC coefficient to a coefficient in a high-frequency domain by using a zig-zag scan method and change it into a shape of a one-dimensional vector. According to a size of a transform unit and an intra prediction mode, instead of zig-zag scan, vertical scan where a coefficient in a shape of a two-dimensional block is scanned in a column direction, horizontal scan where a coefficient in a shape of a two-dimensional block is scanned in a row direction or diagonal scan where a coefficient in a shape of a two-dimensional block is scanned in a diagonal direction may be used. In other words, which scan method among zig-zag scan, vertical directional scan, horizontal directional scan or diagonal scan will be used may be determined according to a size of a transform unit and an intra prediction mode.

An entropy encoding unit 165 may perform entropy encoding based on values calculated by a rearrangement unit 160. Entropy encoding, for example, may use various encoding methods such as exponential Golomb, CAVLC(Context-Adaptive Variable Length Coding), CABAC(Context-Adaptive Binary Arithmetic Coding).

An entropy encoding unit 165 may encode a variety of information such as residual value coefficient information and block type information in a coding unit, prediction mode information, partitioning unit information, prediction unit information and transmission unit information, motion vector information, reference frame information, block interpolation information, filtering information, etc. from a rearrangement unit 160 and prediction units 120 and 125.

An entropy encoding unit 165 may perform entropy encoding for a coefficient value in a coding unit which is input from a rearrangement unit 160.

A dequantization unit 140 and an inverse transform unit 145 dequantize values quantized in a quantization unit 135 and inversely transform values transformed in a transform unit 130. A residual value generated by a dequantization unit 140 and an inverse transform unit 145 may be combined with a prediction unit predicted by a motion prediction unit, a motion compensation unit and an intra prediction unit included in prediction units 120 and 125 to generate a reconstructed block.

A filter unit 150 may include at least one of a deblocking filter, an offset correction unit and an adaptive loop filter (ALF).

A deblocking filter may remove block distortion which is generated by a boundary between blocks in a reconstructed picture. In order to determine whether deblocking is performed, whether a deblocking filter will be applied to a current block may be determined based on a pixel included in several rows or columns included in a block. When a deblocking filter is applied to a block, a strong filter or a weak filter may be applied according to required deblocking filtering strength. In addition, in applying a deblocking filter, when horizontal filtering and vertical filtering are performed, horizontal directional filtering and vertical directional filtering may be set to be processed in parallel.

An offset correction unit may correct an offset with an original image in a unit of a pixel for an image that deblocking was performed. In order to perform offset correction for a specific picture, a region where an offset will be performed may be determined after dividing a pixel included in an image into the certain number of regions and a method in which an offset is applied to a corresponding region or a method in which an offset is applied by considering edge information of each pixel may be used.

Adaptive loop filtering (ALF) may be performed based on a value obtained by comparing a filtered reconstructed image with an original image. After a pixel included in an image is divided into predetermined groups, filtering may be discriminately performed per group by determining one filter which will be applied to a corresponding group. Information related to whether to apply ALF may be transmitted per coding unit (CU) for a luma signal and a shape and a filter coefficient of an ALF filter to be applied may vary according to each block. In addition, an ALF filter in the same shape (fixed shape) may be applied regardless of a characteristic of a block to be applied.

A memory 155 may store a reconstructed block or picture calculated through a filter unit 150 and a stored reconstructed block or picture may be provided to prediction units 120 and 125 when performing inter prediction.

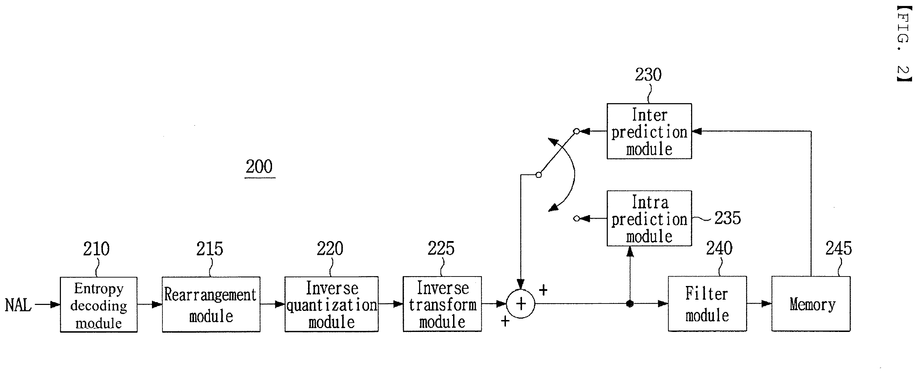

FIG. 2 is a block diagram showing an image decoding device according to an embodiment of the present disclosure.

Referring to FIG. 2, an image decoding device 200 may include an entropy decoding unit 210, a rearrangement unit 215, a dequantization unit 220, an inverse transform unit 225, prediction units 230 and 235, a filter unit 240, and a memory 245.

When an image bitstream is input from an image encoding device, an input bitstream may be decoded according to a procedure opposite to that of an image encoding device.

An entropy decoding unit 210 may perform entropy decoding according to a procedure opposite to a procedure in which entropy encoding is performed in an entropy encoding unit of an image encoding device. For example, in response to a method performed in an image encoding device, various methods such as Exponential Golomb, CAVLC (Context-Adaptive Variable Length Coding), CABAC (Context-Adaptive Binary Arithmetic Coding) may be applied.

An entropy decoding unit 210 may decode information related to intra prediction and inter prediction performed in an encoding device.

A rearrangement unit 215 may perform rearrangement based on a method that a bitstream entropy-decoded in an entropy decoding unit 210 is rearranged in an encoding unit. Coefficients expressed in a form of a one-dimensional vector may be rearranged by being reconstructed into coefficients in a form of a two-dimensional block. A rearrangement unit 215 may receive information related to coefficient scanning performed in an encoding unit and perform rearrangement through a method in which scanning is inversely performed based on scanning order performed in a corresponding encoding unit.

A dequantization unit 220 may perform dequantization based on a quantization parameter provided from an encoding device and a coefficient value of a rearranged block.

An inverse transform unit 225 may perform transform performed in a transform unit, i.e., inverse transform for DCT, DST, and KLT, i.e., inverse DCT, inverse DST and inverse KLT for a result of quantization performed in an image encoding device. Inverse transform may be performed based on a transmission unit determined in an image encoding device. In an inverse transform unit 225 of an image decoding device, a transform technique (for example, DCT, DST, KLT) may be selectively performed according to a plurality of information such as a prediction method, a size or a shape of a current block, a prediction mode, an intra prediction direction, etc.

Prediction units 230 and 235 may generate a prediction block based on information related to generation of a prediction block provided from an entropy decoding unit 210 and pre-decoded block or picture information provided from a memory 245.

As described above, when a size of a prediction unit is the same as a size of a transform unit in performing intra prediction in the same manner as an operation in an image encoding device, intra prediction for a prediction unit may be performed based on a pixel at a left position of a prediction unit, a pixel at a top-left position and a pixel at a top position, but when a size of a prediction unit is different from a size of a transform unit in performing intra prediction, intra prediction may be performed by using a reference pixel based on a transform unit. In addition, intra prediction using $N \times N$ partitioning may be used only for the smallest coding unit.

Prediction units 230 and 235 may include a prediction unit determination unit, an inter prediction unit and an intra prediction unit. A prediction unit determination unit may receive a variety of information such as prediction unit information, prediction mode information of an intra prediction method, motion prediction-related information of an inter prediction method, etc. which are input from an entropy decoding unit 210, divide a prediction unit in a current coding unit and determine whether a prediction unit performs inter prediction or intra prediction. An inter prediction unit 230 may perform inter prediction for a current prediction unit based on information included in at least one picture of a previous picture or a subsequent picture of a current picture including a current prediction unit by using information necessary for inter prediction in a current prediction unit provided from an image encoding device. Alternatively, inter prediction may be performed based on information on some regions which are pre-reconstructed in a current picture including a current prediction unit.

In order to perform inter prediction, whether a motion prediction method in a prediction unit included in a corresponding coding unit is a skip mode, a merge mode, an AMVP mode, or an intra block copy mode may be determined based on a coding unit.

An intra prediction unit 235 may generate a prediction block based on pixel information in a current picture. When a prediction unit is a prediction unit which performed intra prediction, intra prediction may be performed based on intra prediction mode information in a prediction unit provided from an image encoding device. An intra prediction unit 235 may include an adaptive intra smoothing (AIS) filter, a reference pixel interpolation unit and a DC filter. As a part performing filtering on a reference pixel of a current block, an AIS filter may be applied by determining whether a filter is applied according to a prediction mode in a current prediction unit. AIS filtering may be performed for a reference pixel of a current block by using AIS filter information and a prediction mode in a prediction unit provided from an image encoding device. When a prediction mode of a current block is a mode which does not perform AIS filtering, an AIS filter may not be applied.

When a prediction mode in a prediction unit is a prediction unit which performs intra prediction based on a pixel value which interpolated a reference pixel, a reference pixel interpolation unit may interpolate a reference pixel to generate a reference pixel in a unit of a pixel equal to or less than an integer value. When a prediction mode in a current prediction unit is a prediction mode which generates a prediction block without interpolating a reference pixel, a reference pixel may not be interpolated. A DC filter may generate a prediction block through filtering when a prediction mode of a current block is a DC mode.

A reconstructed block or picture may be provided to a filter unit 240. A filter unit 240 may include a deblocking filter, an offset correction unit and ALF.

Information on whether a deblocking filter was applied to a corresponding block or picture and information on whether a strong filter or a weak filter was applied when a deblocking filter was applied may be provided from an image encoding device. Information related to a deblocking filter provided from an image encoding device may be provided in a deblocking filter of an image decoding device and deblocking filtering for a corresponding block may be performed in an image decoding device.

An offset correction unit may perform offset correction on a reconstructed image based on offset value information, a type of offset correction, etc. applied to an image when performing encoding.

ALF may be applied to a coding unit based on information on whether ALF is applied, ALF coefficient information, etc. provided from an encoding device. Such ALF information may be provided by being included in a specific parameter set.

A memory 245 may store a reconstructed picture or block for use as a reference picture or a reference block and provide a reconstructed picture to an output unit.

As described above, hereinafter, in an embodiment of the present disclosure, a coding unit is used as a term of a coding unit for convenience of a description, but it may be a unit which performs decoding as well as encoding.

In addition, as a current block represents a block to be encoded/decoded, it may represent a coding tree block (or a coding tree unit), a coding block (or a coding unit), a transform block (or a transform unit) or a prediction block (or a prediction unit) or a block to which an in-loop filter is applied, etc. according to an encoding/decoding step. In this specification, 'unit' may represent a base unit for performing a specific encoding/decoding process and 'block' may represent a pixel array in a predetermined size. Unless otherwise classified, 'block' and 'unit' may be used interchangeably. For example, in the after-described embodiment, it may be understood that a coding block (a coding block) and a coding unit (a coding unit) are used interchangeably.

Furthermore, a picture including a current block is referred to as a current picture.

When encoding a current picture, duplicate data between pictures may be removed through inter prediction. Inter prediction may be performed in a unit of a block. Specifically, a prediction block of a current block may be generated from a reference picture by using motion information of a current block. Here, motion information may include at least one of a motion vector, a reference picture index and a prediction direction.

Motion information of a current block may be generated through motion estimation.

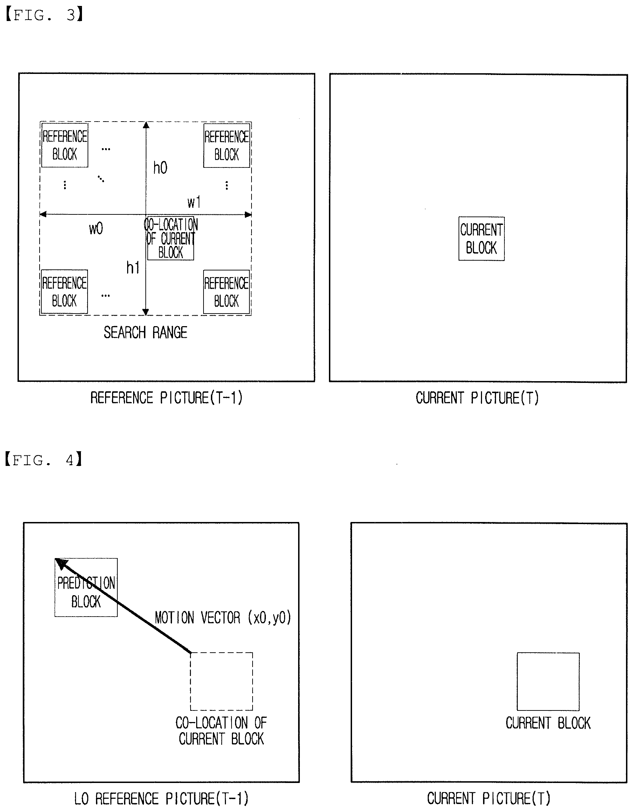

FIG. 3 shows an example in which motion estimation is performed.

In FIG. 3, it is assumed that Picture Order Count (POC) of a current picture is T and POC of a reference picture is (T-1).

A search range for motion estimation may be configured from the same position as a reference point of a current block in a reference picture. Here, a reference point may be a position of a top-left sample of a current block.

As an example, in FIG. 3, it is illustrated that based on a reference point, a quadrangle in a size of (w0+w01) and (h0+h1) is configured as a search range. In the example, w0, w1, h0 and h1 may have the same value. Alternatively, at least one of w0, w1, h0 and h1 may be configured to have a different value from the other. Alternatively, a size of w0, w1, h0 and h1 may be determined not to exceed a coding tree unit (CTU) boundary, a slice boundary, a tile boundary or a picture boundary.

After configuring reference blocks with the same size as a current block within a search range, a cost with a current block may be measured for each reference block. A cost may be calculated by using similarity between two blocks.

As an example, a cost may be calculated based on a sum of absolute values of difference values between original samples in a current block and original samples (or reconstructed samples) in a reference block. As a sum of absolute values is smaller, a cost may be reduced.

Afterwards, after comparing a cost of each reference block, a reference block with an optimal cost may be configured as a prediction block of a current block.

And, a distance between a current block and a reference block may be configured as a motion vector. Specifically, a x-coordinate difference and a y-coordinate difference between a current block and a reference block may be configured as a motion vector.

Furthermore, an index of a picture including a reference block specified through motion estimation is configured as a reference picture index.

In addition, a prediction direction may be configured based on whether a reference picture belongs to a L0 reference picture list or belongs to a L1 reference picture list.

In addition, motion estimation may be performed for each of a L0 direction and a L1 direction. When prediction is performed for both a L0 direction and a L1 direction, motion information in a L0 direction and motion information in a L1 direction may be generated, respectively.

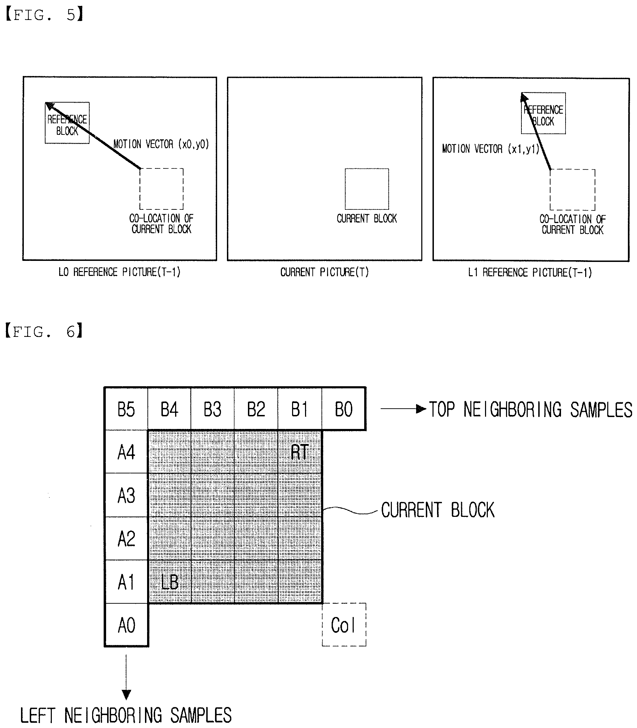

FIGS. 4 and 5 show an example in which a prediction block of a current block is generated based on motion information generated through motion estimation.

FIG. 4 shows an example in which a prediction block is generated through unidirectional (i.e., L0 direction) prediction, and FIG. 5 shows an example in which a prediction block is generated through bidirectional (i.e., L0 and L1 direction) prediction.

For unidirectional prediction, a prediction block of a current block is generated by using one motion information. As an example, the motion information may include a L0 motion vector, a L0 reference picture index and prediction direction information indicating a L0 direction.

For bidirectional prediction, a prediction block is generated by using two motion information. As an example, a reference block in a L0 direction specified based on motion information on a L0 direction (L0 motion information) may be configured as a L0 prediction block, and a reference block in a L1 direction specified based on motion information on a L1 direction (L1 motion information) may be configured as a L1 prediction block. Afterwards, a prediction block of a current block may be generated by performing a weighted sum for a L0 prediction block and a L1 prediction block.

In an example shown in FIGS. 3 to 5, it was illustrated that a L0 reference picture exists in a direction before a current picture (i.e., a POC value is smaller than a current picture) and a L1 reference picture exists in a direction after a current picture (i.e., a POC value is larger than a current picture).

However, unlike an example shown, a L0 reference picture may exist in a direction after a current picture or a L1 reference picture may exist in a direction before a current picture. As an example, both a L0 reference picture and a L1 reference picture may exist in a direction before a current picture or both may exist in a direction after a current picture. Alternatively, bidirectional prediction may be performed by using a L0 reference picture that exists in a direction after a current picture and a L1 reference picture that exists in a direction before a current picture.

Motion information of a block that inter prediction was performed may be stored in a memory. In this case, motion information may be stored in a unit of a sample. Specifically, motion information of a block to which a specific sample belongs may be stored as motion information of a specific sample. Stored motion information may be used to derive motion information of a neighboring block to be encoded/decoded later.

An encoder may signal to a decoder information obtained by encoding a residual sample corresponding to a difference value between a sample of a current block (i.e., an original sample) and a prediction sample and motion information necessary to generate a prediction block. A decoder may decode information on a signaled difference value to derive a difference sample and add a prediction sample within a prediction block generated by using motion information to the difference sample to generate a reconstructed sample.

In this case, in order to effectively compress motion information signaled to a decoder, one of a plurality of inter prediction modes may be selected. Here, a plurality of inter prediction modes may include a motion information merge mode and a motion vector prediction mode.

A motion vector prediction mode is a mode in which a difference value between a motion vector and a motion vector prediction value is encoded and signaled. Here, a motion vector prediction value may be derived based on motion information of a surrounding sample or a surrounding block adjacent to a current block.

FIG. 6 shows a position referred to in order to derive a motion vector prediction value.

For convenience of a description, it is assumed that a current block has a size of $4 \times 4$.

In a shown example, 'LB' represents a sample included in the leftmost column and bottommost row in a current block. 'RT' represents a sample included in the rightmost column and uppermost row in a current block. A0 to A4 represent samples neighboring to the left of a current block, and B0 to B5 represent samples neighboring to the top of a current block. As an example, A1 represents a sample neighboring to the left of LB, and B1 represents a sample neighboring to the top of RT.

Col represents a position of a sample neighboring the bottom-right of a current block in a co-located picture. A co-located picture is a picture different from a current picture, and information for specifying a co-located picture may be explicitly encoded and signaled in a bitstream. Alternatively, a reference picture with a pre-defined reference picture index may be set as a co-located picture.

A motion vector prediction value of a current block may be derived from at least one motion vector prediction candidate included in a motion vector prediction list.

The number of motion vector prediction candidates that may be inserted into a motion vector prediction list (i.e., a size of a list) may be pre-defined in an encoder and a decoder. As an example, the maximum number of motion vector prediction candidates may be two.

A motion vector stored at a position of a neighboring sample adjacent to a current block or a scaled motion vector derived by scaling the motion vector may be inserted into a motion vector prediction list as a motion vector prediction candidate. In this case, a motion vector prediction candidate may be derived by scanning neighboring samples adjacent to a current block in pre-defined order.

As an example, whether a motion vector is stored at each position in order from A0 to A4 may be checked. And, according to the scan order, an available motion vector found first may be inserted into a motion vector prediction list as a motion vector prediction candidate.

As another example, whether a motion vector is stored at each position in order from A0 to A4 is checked, but a motion vector at a position having the same reference picture as a current block, which was found first, may be inserted into a motion vector prediction list as a motion vector prediction candidate. If there is no neighboring sample having the same reference picture as a current block, a motion vector prediction candidate may be derived based on an available vector found first. Specifically, after scaling an available motion vector found first, a scaled motion vector may be inserted into a motion vector prediction list as a motion vector prediction candidate. In this case, scaling may be performed based on an output order difference between a current picture and a reference picture (i.e., a POC difference) and an output order difference between a current picture and a reference picture of a neighboring sample (i.e., a POC difference).

Furthermore, it is possible to check whether a motion vector is stored at each position in order from B0 to B5. And, according to the scan order, an available motion vector found first may be inserted into a motion vector prediction list as a motion vector prediction candidate.

As another example, whether a motion vector is stored at each position in order from B0 to B5 is checked, but a motion vector at a position having the same reference picture as a current block, which was found first, may be inserted into a motion vector prediction list as a motion vector prediction candidate. If there is no neighboring sample having the same reference picture as a current block, a motion vector prediction candidate may be derived based on an available vector found first. Specifically, after scaling an available motion vector found first, a scaled motion vector may be inserted into a motion vector prediction list as a motion vector prediction candidate. In this case, scaling may be performed based on an output order difference between a current picture and a reference picture (i.e., a POC difference) and an output order difference between a current picture and a reference picture of a neighboring sample (i.e., a POC difference).

As in an example described above, a motion vector prediction candidate may be derived from a sample adjacent to the left of a current block, and a motion vector prediction candidate may be derived from a sample adjacent to the top of a current block.

In this case, a motion vector prediction candidate derived from a left sample may be inserted into a motion vector prediction list before a motion vector prediction candidate derived from a top sample. In this case, an index allocated to a motion vector prediction candidate derived from a left sample may have a smaller value than a motion vector prediction candidate derived from a top sample.

Contrary to the above, a motion vector prediction candidate derived from a top sample may be inserted into a motion vector prediction list before a motion vector prediction candidate derived from a left sample.

Among motion vector prediction candidates included in the motion vector prediction list, a motion vector prediction candidate with the highest encoding efficiency may be set as a motion vector predictor (MVP) of a current block. In addition, index information indicating a motion vector prediction candidate that is set as a motion vector prediction value of a current block among a plurality of motion vector prediction candidates may be encoded and signaled to a decoder. When the number of motion vector prediction candidates is two, the index information may be a 1-bit flag (e.g., a MVP flag). In addition, a motion vector difference (MVD), a difference between a motion vector of a current block and a motion vector prediction value, may be encoded and signaled to a decoder. As an example, a relationship among a motion vector MV, a motion vector prediction value MVP and a motion vector difference value MVD may be defined as in Equation 1 below.

【Equation 1】

$$mv[i] = mvp[i] + mvd[i], i = 0, 1$$

In Equation 1 above, when i is 0, it represents a vector component in a horizontal direction (i.e., a x-axis direction). When i is 1, it represents a vector component in a vertical direction (i.e., a y-axis direction).

A decoder may construct a motion vector prediction list in the same way as an encoder. In addition, index information may be decoded from a bitstream, and one of a plurality of motion vector prediction candidates may be selected based on decoded index information. A selected motion vector prediction candidate may be set as a motion vector prediction value of a current block.

In addition, a motion vector difference value may be decoded from a bitstream. Afterwards, a motion vector of a current block may be derived by combining a motion vector prediction value and a motion vector difference value.

When bidirectional prediction is applied to a current block, a motion vector prediction list may be generated for each of a L0 direction and a L1 direction. In other words, a motion vector prediction list may be composed of motion vectors in the same direction. Accordingly, a motion vector of a current block and motion vector prediction candidates included in a motion vector prediction list have the same direction.

When a motion vector prediction mode is selected, a reference picture index and prediction direction information may be explicitly encoded and signaled to a decoder. As an example, when a plurality of reference pictures exist in a reference picture list and motion estimation is performed for each of a plurality of reference pictures, a reference picture index for specifying a reference picture from which motion information of a current block is derived among the plurality of reference pictures may be explicitly encoded and signaled to a decoder.

In this case, if a reference picture list includes only one reference picture, encoding/decoding of the reference picture index may be omitted.

Prediction direction information may be an index indicating one of L0 unidirectional prediction, L1 unidirectional prediction or bidirectional prediction. Alternatively, a L0 flag representing whether prediction in a L0 direction is performed and a L1 flag representing whether prediction in a L1 direction is performed may be encoded and signaled, respectively.

A motion information merge mode is a mode that sets motion information of a current block to be the same as motion information of a neighboring block. In a motion information merge mode, motion information may be encoded/decoded by using a motion information merge list.

A motion information merge candidate may be derived based on motion information of a neighboring block or a neighboring sample adjacent to a current block. As an example, after pre-defining a reference position around a current block, it is possible to check whether motion information exists at a pre-defined reference position. If motion information exists at a pre-defined reference position, motion information at a corresponding position may be inserted into a motion information merge list as a motion information merge candidate.

In an example of FIG. 6, a pre-defined reference position may include at least one of A0, A1, B0, B1, B5 and Col. Furthermore, a motion information merge candidate may be derived in order of A1, B1, B0, A0, B5 and Col.

Among motion information merge candidates included in a motion information merge list, motion information of a motion information merge candidate with an optimal cost may be set as motion information of a current block. Furthermore, index information (e.g., a merge index) indicating a motion information merge candidate selected among a plurality of motion information merge candidates may be encoded and transmitted to a decoder.

In a decoder, a motion information merge list may be constructed in the same way as in an encoder. And, a motion information merge candidate may be selected based on a merge index decoded from a bitstream. Motion information of a selected motion information merge candidate may be set as motion information of a current block.

Unlike a motion vector prediction list, a motion information merge list consists of a single list regardless of a prediction direction. In other words, a motion information merge candidate included in a motion information merge list may have only L0 motion information or L1 motion information, or may have bidirectional motion information (i.e., L0 motion information and L1 motion information).

As described above, when a motion vector prediction mode is applied, an encoder may explicitly encode and signal information on a motion vector difference value. Information on a motion vector difference value may include size information of a motion vector difference value and sign information of a motion vector difference value.

Information on a motion vector difference value may be encoded and signaled for each of a L0 direction and a L1 direction.

Alternatively, if a L0 motion vector difference value and a L1 motion vector difference value are symmetrical, encoding of a L1 motion vector difference value may be omitted, and only a L0 motion vector difference value may be encoded and signaled. In this case, a L1 motion vector difference value may be set as a vector whose size is the same as that of a L0 motion vector difference value, but whose direction is opposite.

Size information may include a first flag representing whether an absolute value of a motion vector difference is greater than 0, a second flag representing whether an absolute value of a motion vector difference is greater than 1 and residual value information. In addition, size information may be encoded and signaled for each of a component in a horizontal direction and a component in a vertical direction.

When an absolute value of a motion vector difference is 0, a value of a first flag is set as 0, while encoding of a second flag, residual value information and motion vector difference sign information may be omitted. If an absolute value of a motion vector difference is greater than 0, a value of a first flag may be set as 1, and a second flag may be additionally encoded.

When an absolute value of a motion vector difference is 1, a value of a second flag is set as 0, while encoding of residual value information may be omitted. If an absolute value of a motion vector difference is greater than 1, a value of a second flag is set as 1, and residual value information may be additionally encoded.

Residual value information represents a value obtained by subtracting 2 from an absolute value of a motion vector difference.

A decoder may determine an absolute value of a motion vector difference based on at least one of a first flag, a second flag and residual value information. As an example, when a value of a first flag is 0, an absolute value of a motion vector difference may be set as O. On the other hand, when a value of a first flag is 1 and a value of a second flag is 0, an absolute value of a motion vector difference may be set as 1. On the other hand, when a value of a first flag and a second flag is 1, a motion vector difference value may be derived by adding 2 to residual value information.

Sign information represents whether a motion vector difference value is positive or negative. Sign information may be encoded for each of a component in a horizontal direction and a component in a vertical direction, and each sign information may be a 1-bit flag.

Size information of a motion vector difference value and sign information of a motion vector difference value described above may be encoded and signaled for a L0 direction and a L1 direction, respectively.

Meanwhile, size information, e.g., at least one of a first flag, a second flag and residual value information, may be encoded through context coding using probability information. Alternatively, a first flag and a second flag may be encoded through context coding, while residual value information may be encoded without using probability information.

For a motion vector difference value, distribution of a positive value and a negative value is not constant and is random. Accordingly, sign information may be encoded without using probability information. Encoding that does not use probability information may be referred to as bypass coding.

For bypass coding, encoding/decoding efficiency is lower than that of context coding. Considering this, the present disclosure proposes a method for predicting a sign of a motion vector difference value, instead of explicitly signaling sign information of a motion vector difference value.

When sign prediction proposed in the present disclosure is applied, encoding of sign information may be omitted for at least one of a component in a horizontal direction or a component in a vertical direction of a motion vector difference value. Instead of omitting encoding of the sign information, sign prediction information indicating whether a predicted sign matches an actual sign may be encoded. Hereinafter, a sign prediction method proposed in the present disclosure is described in detail.

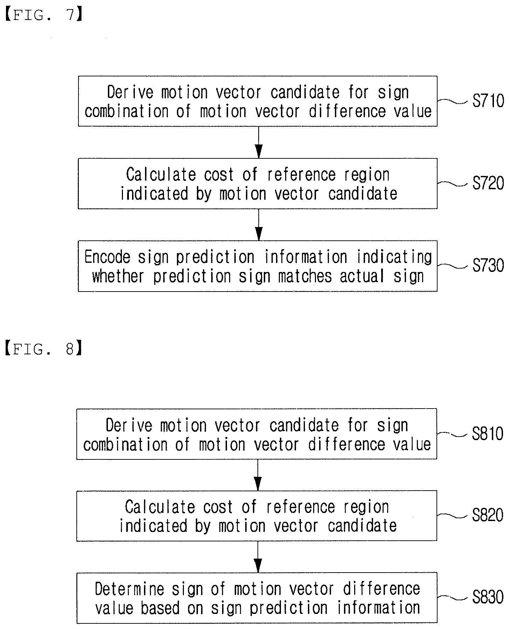

FIG. 7 shows an encoding method for predicting a sign of a motion vector difference value, and FIG. 8 shows a decoding method to which sign prediction of a motion vector difference value is applied.

First, motion vector candidates may be derived by using each of sign combinations for at least one component to which sign prediction is applied S710, S810. As an example, when sign prediction is applied to both a component in a horizontal direction and a component in a vertical direction, there are four sign combinations such as (+, +), (+, -), (-, +), and (-, +), etc. On the other hand, when sign prediction is applied to only one of a component in a horizontal direction and a component in a vertical direction, two sign combinations such as + or -, etc. exist. In other words, if the number of components to which sign prediction is applied is N, up to 2^N sign combinations may exist.

Meanwhile, if an absolute value is 0, a sign combination may not be applied to a component. As an example, if an absolute value of a component in a horizontal direction is greater than 0, while an absolute value of a component in a vertical direction is 0, only two sign combinations may exist.

For convenience of a description, in an embodiment described later, it is assumed that an absolute value of a component in a horizontal direction and a component in a vertical direction is greater than 0 and sign prediction is applied to both components.

A motion vector candidate may be derived by adding a motion vector difference value corresponding to each sign combination to a motion vector prediction value.

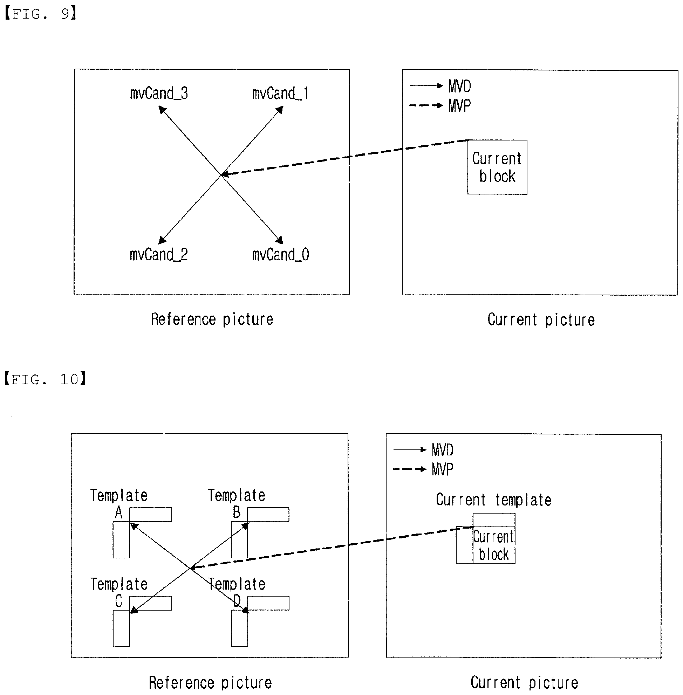

FIG. 9 is a diagram showing motion vector candidates.

For convenience of a description, for a horizontal direction, it is assumed that a left direction is a negative (-) direction and a right direction is a positive (+) direction, and for a vertical direction, it is assumed that an upward direction is a negative (-) direction and a downward direction is a positive (+) direction.

When four sign combinations exist, as in an example shown in FIG. 9, up to four motion vector candidates may be derived.

Specifically, each of motion vector candidates may be derived according to the following Equations 2 to 5.

【Equation 2】

$$mvCand\_0[0] = mvp[0] + (+mvd[0])$$
$$mvCand\_0[1] = mvp[1] + (+mvd[1])$$

【Equation 3】

$$mvCand\_1[0] = mvp[0] + (+mvd[0])$$
$$mvCand\_1[1] = mvp[1] + (-mvd[1])$$

【Equation 4】

$$mvCand\_2[0] = mvp[0] + (-mvd[0])$$
$$mvCand\_2[1] = mvp[1] + (+mvd[1])$$

【Equation 5】

$$mvCand\_3[0] = mvp[0] + (-mvd[0])$$
$$mvCand\_3[1] = mvp[1] + (-mvd[1])$$

Equation 2 shows an example of deriving a first motion vector candidate (mvCand_0) by setting both a sign of a component in a horizontal direction and a component in a vertical direction to be positive (+). Equation 3 shows an example of deriving a second motion vector candidate (mvCand_1) by setting a sign of a component in a horizontal direction to be positive and a sign of a component in a vertical direction to be negative. Equation 4 shows an example of deriving a third motion vector candidate (mvCand_2) by setting a sign of a component in a horizontal direction to be negative and a sign of a component in a vertical direction to be positive. Equation 5 shows an example of deriving a fourth motion vector candidate (mvCand_3) by setting both a sign of a component in a horizontal direction and a component in a vertical direction to be negative (-).

Once motion vector candidates are derived, a cost for a reference region specified based on each of motion vector candidates may be calculated S720, S820. Here, a reference region may be at least one of a reference block indicated by a motion vector candidate in a reference picture or a reference template adjacent to the reference block. A cost for a reference region may refer to a cost between a reference template and a current template, or a cost between a L0 reference block and a L1 reference block calculated based on bilateral matching.

A reference template may be composed of reconstructed regions adjacent to a reference block indicated by a motion vector candidate. Specifically, at least one of a top reconstructed region adjacent to a reference block and a left reconstructed region adjacent to a reference block may be set as a reference template.

FIG. 10 shows a reference template for each motion vector candidate in a reference picture.

Template A indicates a reference template specified by a motion vector candidate (i.e., mvCand_3) derived when signs of a component in a horizontal direction and a component in a vertical direction of a motion vector difference value is in a negative direction, and Template B indicates a reference template specified by a motion vector candidate (mvCand_1) derived when a component in a horizontal direction of a motion vector difference value is in a positive direction, but a component in a vertical direction of a motion vector difference value is in a negative direction. In addition, Template C indicates a reference template specified by a motion vector candidate (i.e., mvCand_2) derived when a component in a horizontal direction of a motion vector difference value is in a negative direction, but a component in a vertical direction of a motion vector difference value is in a positive direction, and Template D indicates a reference template specified by a motion vector candidate (i.e., mvCand_0) derived when signs of a component in a horizontal direction and a component in a vertical direction of a motion vector difference value is in a positive direction.

For each reference template, a cost with a current template neighboring a current block may be calculated. A current template may be composed of reconstructed regions adjacent to a current block. As an example, a current template may include at least one of a top reconstructed region adjacent to a current block and a left reconstructed region adjacent to a current block.

A cost between a reference template and a current template may be calculated based on a Sum of Absolute Difference (SAD). Specifically, for each reconstructed sample included in a reference template, a difference with a corresponding reconstructed sample in a current template may be derived. Afterwards, a sum of a difference derived for each reconstructed sample may be set as a cost of a reference template.

Meanwhile, if a motion vector candidate indicates a position out of a boundary of a reference picture or if at least part of a reference template is out of a reference picture, a corresponding motion vector candidate or a corresponding reference template may be set to be unavailable.

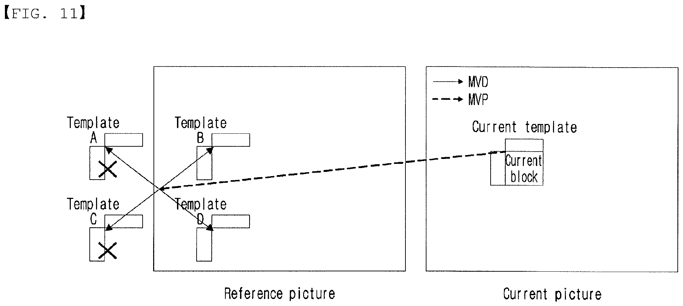

FIG. 11 is a diagram for describing an unavailable reference template.

In an example shown in FIG. 11, template A and template C are positioned outside a reference picture. Accordingly, template A and template C may be set to be unavailable. Alternatively, a motion vector candidates used to derive each of template A and template C may be set to be unavailable.

For an unavailable reference template, a process of calculating a cost may be omitted. In addition, a sign combination used to derive an unavailable reference template is not set as a prediction sign. In other words, in an example shown in FIG. 11, an available sign combination is a sign combination (+, -) used for template A and a sign combination (+, +) used for template D. In other words, since only a sign of + is available for a x component, encoding of sign information (i.e., a sign of +) for a x component may be omitted. Meanwhile, according to a candidate combination available in a decoder, a sign of a x component may be implicitly determined to be +.

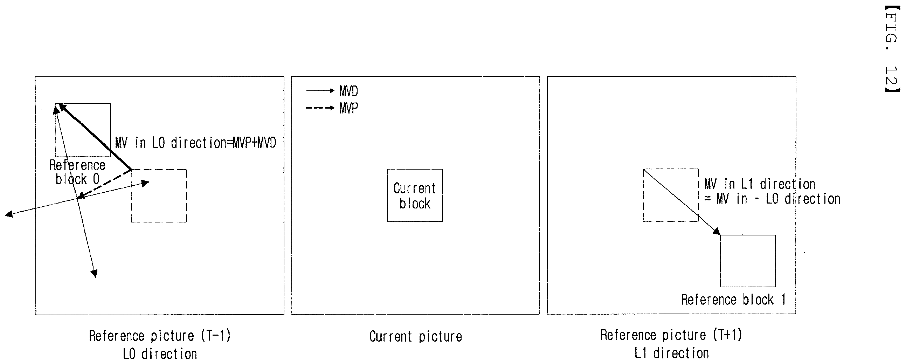

FIG. 12 is a diagram for describing an example in which a cost is calculated based on bidirectional matching.

For convenience of a description, it is assumed that sign prediction of a motion vector residual value is applied only to a L0 direction among a L0 direction and a L1 direction.

A L0 reference block within four L0 reference pictures may be determined based on each of four motion vector candidates. In an example shown in FIG. 12, it was illustrated that a L0 reference block (reference block 0) is specified based on a motion vector candidate (i.e., mvCand_3) derived by a motion vector difference value in which a sign in a horizontal direction and a sign in a vertical direction are in a negative direction, respectively.

In addition, four L1 reference blocks within a L1 picture may be determined by mirroring each of motion vector candidates. Mirroring may refer to setting a sign in a horizontal direction and a sign in a vertical direction of a motion vector candidate to be opposite. In other words, a L1 reference block may be determined based on a motion vector that has the same absolute value as a motion vector candidate, but is in an opposite direction.

Afterwards, a cost between a L0 reference block and a corresponding L1 reference block may be calculated. In this case, the cost may be calculated based on a SAD.

Meanwhile, for a L1 direction, when sign information on a motion vector residual value is signaled, a L1 reference block may be set by using an actual L1 motion vector. In this case, a cost of each of four L0 reference blocks may be calculated through a SAD with one L1 reference block specified by an actual L1 motion vector.

If a reference block indicated by a motion vector candidate exists outside a reference picture, bilateral matching may not be applied to a corresponding reference block.

A sign of a motion vector difference value used to derive a reference template with the lowest cost among a plurality of reference templates or a combination with the lowest cost among a plurality of L0 reference block and L1 reference block combinations may be referred to as a prediction sign.

An encoder may encode sign prediction information indicating whether a prediction sign matches an actual sign S730. Specifically, for each of a component in a horizontal direction and a component in a vertical direction of a motion vector prediction value, sign prediction information indicating whether an actual sign matches prediction information may be encoded. The information may be a 1-bit flag.

A decoder may determine a sign of a motion vector difference value or derive a motion vector based on a reference region with the lowest cost S830.

As an example, it is assumed that a sign combination of a component in a horizontal direction and a component in a vertical direction of a motion vector difference value used to derive a reference region with the lowest cost is (+, +). In this case, if it indicates that both sign prediction information for a component in a horizontal direction and a sign prediction component for a component in a vertical direction match an actual sign, a motion vector candidate used to derive a reference cost with the lowest cost may be set as a motion vector of a current block. In other words, a sign combination for a component in a horizontal direction and a component in a vertical direction of a motion vector difference value may be determined to be the same as a sign combination used to derive a reference region with the lowest cost.

On the other hand, if it indicates that sign prediction information for a component in a horizontal direction matches an actual sign, but sign prediction information for a component in a vertical direction does not match an actual sign, a motion vector candidate derived based on a (+, -) sign combination may be set as a motion vector of a current block. In other words, a sign combination for a component in a horizontal direction and a component in a vertical direction of a motion vector difference value may be set as a combination whose sign in a horizontal direction is the same as and whose sign in a vertical direction is different from a sign combination used to derive a reference region with the lowest cost.

If it indicates that sign prediction information for a component in a horizontal direction does not match an actual sign, but sign prediction information for a component in a vertical direction matches an actual sign, a motion vector candidate derived based on a (-, +) sign combination may be set as a motion vector of a current block. In other words, a sign combination for a component in a horizontal direction and a component in a vertical direction of a motion vector difference value may be set as a combination whose sign in a horizontal direction is different from and whose sign in a vertical direction is the same as a sign combination used to derive a reference region with the lowest cost.

If it indicates that both sign prediction information for a component in a horizontal direction and a sign prediction component for a component in a vertical direction match an actual sign, a motion vector candidate derived based on a (-, -) sign combination may be set as a motion vector of a current block. In other words, a sign combination for a component in a horizontal direction and a component in a vertical direction of a motion vector difference value may be set as a combination that both a sign in a horizontal direction and a sign in a vertical direction are different from a sign combination used to derive a reference region with the lowest cost.

Sign prediction may be applied to only one of a L0 direction and a L1 direction, or may be applied to both a L0 direction and a L1 direction. As an example, when sign prediction is applied to both a horizontal direction and a vertical direction of a motion vector difference value for a L0 direction and a horizontal direction and a vertical direction of a motion vector difference value for a L1 direction, 16 (2^4) sign combinations may exist.

Alternatively, sign prediction may be applied only in a horizontal direction to one of a L0 direction and a L1 direction, and sign prediction may be also applied only in a vertical direction to the other direction.

Alternatively, sign prediction may be applied by default only to a L0 direction among a L0 direction and a the L1 direction, or sign prediction may be also applied by default only to a L1 direction. Alternatively, information indicating which of a L0 direction and a L1 direction to which sign prediction is applied may be encoded and signaled.

Alternatively, considering a temporal direction of a L0 reference picture and a L1 reference picture, it is possible to consider whether to apply sign prediction to a L0 direction or a L1 direction. Here, a temporal direction indicates whether output order (i.e., Picture Order Count, POC) of a reference picture has a larger value than output order of a current picture. If POC of a reference picture is smaller than POC of a current picture, it shows that a reference picture is a picture output before a current picture (it is defined as a forward picture), and if POC of a reference picture is greater than POC of a current picture, it shows that a reference picture is a picture output after a current picture (it is defined as a backward picture).

As an example, when sign prediction is applied to a L0 direction, whether to additionally apply sign prediction to a L1 direction may be determined based on whether a temporal direction of a L1 reference picture is the same as that of a L0 reference picture.

Alternatively, instead of using a cost of a reference region, by considering an actual sign for one of a L0 direction and a L1 direction, a prediction sign for the other of a L0 direction and a L1 direction may be determined.

As an example, it is assumed that sign prediction is applied to a L1 direction among a L0 direction and a L1 direction. A prediction sign for a motion vector difference value in a L1 direction may be determined based on whether a temporal direction of a L0 reference picture is the same as that of a L1 reference picture. As an example, if a temporal direction of a L1 reference picture is the same as a temporal direction of a L0 picture, an actual sign of a L0 motion vector difference value may be set as a prediction sign of a L1 motion vector difference value. On the other hand, if a temporal direction of a L1 reference picture is different from a temporal direction of a L0 picture, a sign opposite to an actual sign of a L0 motion vector difference value may be set as a prediction sign of a L1 motion vector difference value.

Meanwhile, sign prediction information may be encoded through context coding based on probability information. In other words, when sign prediction is applied, sign prediction information encoded through context coding may be encoded and signaled instead of sign information encoded through bypass coding. Encoding/decoding efficiency may be improved by replacing information encoded by bypass coding (i.e., sign information) with information encoded by context coding (i.e., sign prediction information).

As an example, a probability that sign prediction matches may be set as a value higher than a probability that it does not.

Alternatively, probability information may be determined based on sign information in a direction to which sign prediction is not applied among a L0 direction and a L1 direction. As an example, when sign prediction is applied only to a motion vector difference value in a L0 direction, a probability of having a different sign from a sign of a motion vector difference value in a L1 direction may be set to be higher than a probability of having the same sign.

Alternatively, probability information may be determined by considering a temporal direction of a L0 reference picture and a L1 reference picture. As an example, when a temporal direction of a L0 reference picture is the same as that of a L1 reference picture, a probability of having the same sign as a sign of a motion vector difference value in a L1 direction may be set to be higher than a probability of having a different sign. On the other hand, when a temporal direction of a L0 reference picture is different from that of a L1 reference picture, a probability of having a different sign from a sign of a motion vector difference value in a L1 direction may be set to be higher than a probability of having the same sign.

Meanwhile, instead of signaling sign prediction information indicating whether sign prediction information matches an actual sign, a sign combination used to derive a reference region with the lowest cost among reference regions may be immediately applied to a motion vector difference value. In this case, a 1-bit flag representing whether to apply sign prediction may be encoded and signaled.

Alternatively, instead of sign prediction information, an index identifying one of available sign combinations may be encoded and signaled. In this case, a bin allocated to each sign combination may be adaptively determined according to the number of available candidates and a cost of each combination.

As an example, an index specifying one of sign combinations may be binarized through Truncated Unary (TU). In this case, according to a cost of each sign combination, a length of bins allocated to identify each sign combination may be set differently. As an example, when it is assumed that a cost of a plurality of sign combinations increases in the order of (+, +), (+, -), (-, +) and (-, -), a value of a bin identifying (+, +) with the lowest cost may be set as 0. Next, a bin for identifying (+, -), (-, +) and (-, -) may be set as 10, 110 and 111, respectively. Or, conversely, a bin for identifying (+, +), (+, -), (-, +) and (-, -) may be also expressed by reversing 0 and 1 in a way contrary to an example above.

In this case, a bin may be allocated to available sign combinations, excluding an unavailable sign combination. As an example, in an example shown in FIG. 12, when three available sign combinations are (+, +), (+, -) and (-, -), according to a cost of each sign combination, a bin for identifying a sign combination with the lowest cost may be set as 0, and a bin for identifying the remaining sign combinations may be set as 10 and 11. Alternatively, according to a cost of each sign combination, a bin for identifying a code combination with the lowest cost may be set as 0, and a bin for identifying the remaining sign combinations may be set as 10 and 11.

Even when motion compensation is applied in a unit of a sub-block, sign prediction may be applied.

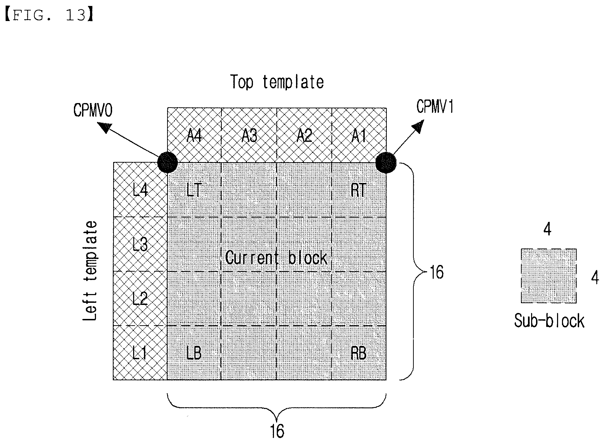

FIG. 13 is a diagram for describing an example in which a motion vector is allocated to each sub-block.

A motion vector may be allocated in a unit of a sub-block by using a plurality of control point motion vectors (CPMV). As an example, in FIG. 13, it was illustrated that based on a first control point motion vector (CPMV0) corresponding to a top-left corner of a current block and a second control point motion vector (CPMV1) corresponding to a top-right corner, a motion vector of each 4x4-sized sub-block is determined.

A motion vector of each sub-block may be also derived by using more control point motion vectors than shown. As an example, a motion vector of each sub-block may be also derived by using three control point motion vectors. For convenience of a description, in an example described later, it is assumed that the number of control point motion vectors is two.

In an encoder, information for determining a plurality of control point motion vectors may be encoded and signaled. As an example, in an encoder, information specifying one of a plurality of control point motion vector candidates and a difference value for each of a plurality of control point motion vectors may be encoded and signaled. The following Equation 6 defines a relationship between a control point motion vector and a control point motion vector difference value.

【Equation 6】

$$CPMV0\_diff\,[\,i\,] = CPMV0\,[\,i\,] - CPMV0\_pred\,[\,i\,], \; i=0,1$$
$$CPMV1\_diff\,[\,i\,] = CPMV1\,[\,i\,] - CPMV1\_pred\,[\,i\,], \; i=0,1$$

A first control point motion vector difference value CPMV0_diff may be derived by subtracting a first control point motion vector prediction value CPMV0_pred from a first control point motion vector CPMV0. A second control point motion vector difference value CPMV1_diff may be derived by subtracting a second control point motion vector prediction value CPMV1_pred from a second control point motion vector CPMV1. Here, i=0 represents a component in a horizontal direction, and i=1 represents a component in a vertical direction.

An encoder may encode and signal information on each of a first control point motion vector difference value and a second control point motion vector difference value. The information may include size information and sign information of a control point motion vector difference value. Since size information and sign information were already described, a detailed description thereof is omitted in this embodiment.

Meanwhile, for a second control point, a difference value between a second control point motion vector difference value and a first control point motion vector difference value, not a second control point motion vector difference value, may be encoded. Equation 7 is to describe an example in which a difference value between a second control point motion vector difference value and a first control point motion vector difference value is encoded.

【Equation 7】

$$CPMV1\_diff\_diff\,[\,i\,] = CPMV1\_diff\,[\,i\,] - CPMV0\_diff\,[\,i\,], \; i=0,1$$

In an encoder, for a first control point, size information and sign information may be determined based on a first control point motion vector difference value CPMV0_diff. On the other hand, for a second control point, size information and sign information may be determined based on CPMV_diff_diff, a difference value between a second control point motion vector difference value CPMV1_diff and a first control point motion vector difference value CPMV0_diff, not a second control point motion vector difference value CPMV1_diff.

In a decoder, for a first control point, a first control point motion vector difference value may be derived based on size information and sign information for a first control point. On the other hand, for a second control point, a second control point motion vector difference value may be derived by adding the first control point motion vector difference value to a difference value derived based on size information and sign information for a second control point.

For convenience of a description, it is assumed that a category of a difference value of a control point motion vector to which sign prediction is applied also includes a difference value between a difference value of a second control point motion vector and a difference value of a first control point motion vector.

Sign prediction may be applied to at least one of a plurality of control point motion vector difference values. As an example, sign prediction may be applied to both a difference value of a first control point motion vector and a difference value of a second motion vector, or sign prediction may be applied to only one of a difference value of a first control point motion vector and a difference value of a second motion vector.

Alternatively, for simplicity, sign prediction may be applied only to a difference value corresponding to a pre-defined control point motion vector. As an example, sign prediction may be applied only to a difference value of a control point motion vector corresponding to a top-left corner of a current block (i.e., a difference value of a first control point motion vector).

In addition, sign prediction may be applied to both a component in a horizontal direction and a component in a vertical direction of each difference value, or sign prediction may be applied to only one of a component in a horizontal direction and a component in a vertical direction.

For a control point motion vector difference value to which sign prediction is applied, encoding/decoding of sign information may be omitted, and sign prediction information may be encoded/decoded.

When sign prediction is applied, a reference region may be derived for each sign combination, and a cost for a derived reference region may be calculated.

Specifically, based on each code combination, motion vectors for a sub-block may be derived. As an example, when sign prediction is applied to a horizontal direction and a vertical direction of a first control point motion vector difference value CPMVO_diff, there may be four sign combinations, and accordingly, four motion vector candidate sets may be derived for sub-blocks. Here, a motion vector candidate set represents motion vectors of sub-blocks that are derived when a specific sign combination is applied.

In this case, for simplicity, a cost may be calculated by using a sub-block at a specific position. As an example, when sign prediction is applied only to a first control point motion vector difference value corresponding to a top-left corner of a current block, motion vectors and reference regions may be derived only for a top-left sub-block (LT) within a current block.

On the other hand, when sign prediction is applied only to a second control point motion vector difference value corresponding to a top-right corner of a current block, motion vectors and reference regions may be derived only for a top-right sub-block (RT) within a current block.

A reference region represents a reference block or a reference template. A cost of a reference region may be calculated through non-bidirectional matching using a cost between a reference template and a current template or a L0 reference block and a L1 reference block.

A reference template for a sub-block may be set based on a size and a position of a sub-block. As an example, a sub-template for a top-left sub-block (LT) may be set as top reconstructed region A4 and left reconstructed region L4 of a top-left sub-block, and a reference template corresponding to it may be set as a top reconstructed region and a left reconstructed region of a reference sub-block specified by a motion vector of a top-left sub-block (LT).

Alternatively, a sub-template for a top-right sub-block (RT) includes top reconstructed region A1 of a top-right sub-block, and a reference template corresponding to it may be set as a top reconstructed region of a reference sub-block specified by a motion vector of a top-right sub-block (RT).

Since there are four sign combinations, four reference templates may be derived for one sub-block. Afterwards, a cost between a current template adjacent to a sub-block and a reference template adjacent to a reference block may be calculated. Specifically, a SAD may be used to calculate a cost between a sub-template and a reference template.

When a cost is calculated based on a bilateral matching method, a L0 sub-reference block and a L1 sub-reference block may be determined for a sub-block. Afterwards, based on a SAD, a cost between a L0 sub-reference block and a L1 sub-reference block may be calculated.

Alternatively, a cost may be calculated by using a plurality of sub-blocks adjacent to a boundary of a current block. As an example, a sign combination may be used to generate a plurality of motion vector candidate sets for sub-blocks bordering a top boundary of a current block and/or a plurality of sub-blocks bordering a left boundary, and based on each motion vector candidate set, a reference region of each of a plurality of sub-blocks may be determined. After calculating a cost for a reference region of each sub-block, a final cost may be calculated by adding up a calculated cost.

Alternatively, a cost may be calculated by using all sub-blocks in a current block. As an example, based on reference template matching or bilateral matching, a cost for each sub-block may be calculated, and a sum of calculated costs may be set as a cost of a sign combination.

An encoder may determine whether a sign combination used to derive a reference region with the lowest cost matches an actual code, and accordingly, encode sign prediction information. When sign prediction is applied to both a component in a horizontal direction and a component in a vertical direction, sign prediction information may be encoded and signaled for each of a component in a horizontal direction and a component in a vertical direction.

As described above, sign prediction information may be encoded based on probability information. In this case, when sign prediction is applied to only any one of a plurality of control point motion vector difference values, probability information may be determined based on a sign of a control point motion vector difference value for which sign information is explicitly signaled. As an example, when sign information is explicitly signaled for a first control point motion vector difference value, while sign prediction is applied to a second control point motion vector difference value, a probability that an actual sign for a second control point motion vector difference value has the same sign as a first control point motion vector difference value may be set to be higher than a probability that it is not. Alternatively, a probability that an actual sign for a second control point motion vector difference value has the same sign as a component in a horizontal direction of a first control point motion vector difference value, but has a different sign from a component in a vertical direction may be set to be higher than a probability that it is not. Alternatively, a probability that an actual sign for a second control point motion vector difference value is different from both a component in a horizontal direction and a component in a vertical direction of a first control point motion vector difference value may be set to be higher than a probability that it is not.

Instead of determining a prediction sign based on reference template matching or bilateral matching, a prediction sign may be determined based on a sign of a control point motion vector difference value to which sign prediction is not applied. As an example, when sign information is explicitly signaled for a first control point motion vector difference value, while sign prediction is applied to a second control point motion vector difference value, a prediction sign for a second control point motion vector difference value may be set to be the same as a sign of a first control point motion vector difference value.

When embodiments described based on a decoding process or an encoding process are applied to an encoding process or a decoding process, it is included in a scope of the present disclosure. When embodiments described in predetermined order are changed in order different from a description, it is also included in a scope of the present disclosure.

The above-described disclosure is described based on a series of steps or flow charts, but it does not limit a time series order of the present disclosure and if necessary, it may be performed at the same time or in different order. In addition, each component (e.g., a unit, a module, etc.) configuring a block diagram in the above-described disclosure may be implemented as a hardware device or software and a plurality of components may be combined and implemented as one hardware device or software. The above-described disclosure may be recorded in a computer readable recoding medium by being implemented in a form of a program instruction which may be performed by a variety of computer components. The computer readable recoding medium may include a program instruction, a data file, a data structure, etc. solely or in combination. A hardware device which is specially configured to store and perform magnetic media such as a hard disk, a floppy disk and a magnetic tape, optical recording media such as CD-ROM, DVD, magneto-optical media such as a floptical disk and a program instruction such as ROM, RAM, a flash memory, etc. is included in a computer readable recoding medium. The hardware device may be configured to operate as one or more software modules in order to perform processing according to the present disclosure and vice versa.

[Industrial Availability]

The present disclosure may be applied to a computing or electronic device which may encode/decode a video signal.

**Claims**

1.  An image decoding method, the method comprising:

    generating a motion vector prediction list for a current block;
    selecting one from a plurality of motion vector prediction candidates included in the motion information prediction list;
    reconstructing a motion vector difference value of the current block; and
    adding the motion vector prediction candidate and the motion vector difference value to derive a motion vector of the current block,
    wherein a sign of the motion vector difference value is determined based on sign prediction information indicating whether a predicted sign matches an actual sign.

2.  The method of Claim 1, wherein:

    motion vector candidates are derived by applying each sign combination of the motion vector difference value,
    a reference region within a reference picture is designated based on each of the motion vector candidates,
    the predicted sign corresponds to a sign combination used to derive a reference region with a smallest cost among a plurality of reference regions.

3.  The method of Claim 2, wherein:

the reference region is a reference template adjacent to a reference block indicated by the motion vector candidate,
a cost for the reference region is obtained by applying a Sum of Difference (SAD) to the reference template and a current template adjacent to the current block.

4. The method of Claim 2, wherein:

the reference region is a L0 reference block indicated by the motion vector candidate,
a cost for the reference region is obtained by applying a SAD to the L0 reference block and a L1 reference block corresponding to the L0 reference block.

5. The method of Claim 2, wherein:
if a reference region indicated by the motion vector candidate is out of a boundary of the reference picture, the motion vector candidate is determined to be unavailable.

6. The method of Claim 1, wherein:
the sign prediction information is decoded based on probability information.

7. The method of Claim 6, wherein:
the probability information is determined based on a sign of a motion vector difference value in a direction to which a sign prediction is not applied among a L0 direction and a L1 direction.

8. The method of Claim 1, wherein:
the sign prediction information is signaled for each of a horizontal direction and a vertical direction.

9. The method of Claim 1, wherein:
the motion vector, the motion vector prediction candidate and the motion vector difference value relate to a control point motion vector of the current block.

10. An image encoding method, the method comprising:

generating a motion vector prediction list for a current block;
selecting one from a plurality of motion vector prediction candidates included in the motion information prediction list;
deriving a motion vector difference value by subtracting a motion vector prediction candidate from a motion vector of the current block;
deriving a prediction sign for the motion vector difference value; and
encoding sign prediction information indicating whether an actual sign of the motion vector difference value matches the prediction sign.

11. The method of Claim 10, wherein:

a plurality of motion vector candidates are derived by applying a plurality of sign combinations to the motion vector difference value,
a reference region within a reference picture is designated based on each of the motion vector candidates,
the predicted sign corresponds to a sign combination used to derive a reference region with a smallest cost among a plurality of reference regions.

12. The method of Claim 11, wherein:

the reference region is a reference template adjacent to a reference block indicated by the motion vector candidate,
a cost for the reference region is obtained by applying a Sum of Difference (SAD) to the reference template and a current template adjacent to the current block.

13. The method of Claim 11, wherein:

the reference region is a L0 reference block indicated by the motion vector candidate,

a cost for the reference region is obtained by applying a SAD to the L0 reference block and a L1 reference block corresponding to the L0 reference block.

14. The method of Claim 11, wherein:
    if a reference region indicated by the motion vector candidate is out of a boundary of the reference picture, the motion vector candidate is determined to be unavailable.

15. A computer readable recording medium storing a bitstream generated by an image encoding method, the computer readable recording medium comprising:

    generating a motion vector prediction list for a current block;
    selecting one from a plurality of motion vector prediction candidates included in the motion information prediction list;
    deriving a motion vector difference value by subtracting the motion vector prediction candidate from a motion vector of the current block;
    deriving a prediction sign for the motion vector difference value; and
    encoding sign prediction information indicating whether an actual sign of the motion vector difference value matches the prediction sign.

【FIG. 1】

【FIG. 2】

【FIG. 3】

REFERENCE PICTURE(T-1)                    CURRENT PICTURE(T)

【FIG. 4】

L0 REFERENCE PICTURE(T-1)                 CURRENT PICTURE(T)

【FIG. 5】

LO REFERENCE PICTURE(T-1)                    CURRENT PICTURE(T)                    L1 REFERENCE PICTURE(T-1)

【FIG. 6】

【FIG. 7】

Derive motion vector candidate for sign
combination of motion vector difference value — S710

Calculate cost of reference region
indicated by motion vector candidate — S720

Encode sign prediction information indicating
whether prediction sign matches actual sign — S730

【FIG. 8】

Derive motion vector candidate for sign
combination of motion vector difference value — S810

Calculate cost of reference region
indicated by motion vector candidate — S820

Determine sign of motion vector difference
value based on sign prediction information — S830

【FIG. 9】

Reference picture          Current picture

【FIG. 10】

Reference picture          Current picture

【FIG. 11】

Reference picture                     Current picture

【FIG. 12】

MV in L1 direction
= MV in - L0 direction

Reference block 1

Reference picture (T+1)
L1 direction

MVD
MVP

Current block

Current picture

MV in L0 direction=MVP+MVD

Reference block 0

Reference picture (T-1)
L0 direction

【FIG. 13】

Top template

CPMV0

Left template

A4   A3   A2   A1

L4   LT                    RT

L3        Current block

L2

L1   LB                    RB

CPMV1

16

16

4

4

Sub-block

### INTERNATIONAL SEARCH REPORT

International application No.

**PCT/KR2022/021374**

| A. | CLASSIFICATION OF SUBJECT MATTER |
|---|---|

**H04N 19/513**(2014.01)i; **H04N 19/105**(2014.01)i; **H04N 19/176**(2014.01)i; **H04N 19/70**(2014.01)i

According to International Patent Classification (IPC) or to both national classification and IPC

| B. | FIELDS SEARCHED |
|---|---|

Minimum documentation searched (classification system followed by classification symbols)

H04N 19/513(2014.01); H04N 19/105(2014.01); H04N 19/109(2014.01); H04N 19/13(2014.01); H04N 19/463(2014.01); H04N 19/52(2014.01); H04N 19/573(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 예측 (prediction), 차분 (difference), 움직임 (motion), 부호 (sign), 참조 (reference)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-140630 A (NIPPON HOSO KYOKAI <NHK>) 22 August 2019 (2019-08-22)<br>See paragraphs [0013]-[0099]. | 1,6-10,15 |
| Y | | 2-5,11-14 |
| Y | KR 10-2021-0156844 A (LG ELECTRONICS INC.) 27 December 2021 (2021-12-27)<br>See paragraphs [0051]-[0143]. | 2-5,11-14 |
| A | KR 10-2019-0057433 A (LG ELECTRONICS INC.) 28 May 2019 (2019-05-28)<br>See claims 1-4. | 1-15 |
| A | KR 10-2019-0054082 A (QUALCOMM INCORPORATED) 21 May 2019 (2019-05-21)<br>See paragraphs [0023]-[0076]. | 1-15 |
| A | WO 2019-150411 A1 (FUJITSU LIMITED) 08 August 2019 (2019-08-08)<br>See claims 1-7. | 1-15 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 March 2023** | **03 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 460 000 A1

**INTERNATIONAL SEARCH REPORT**
**Information on patent family members**

International application No.

**PCT/KR2022/021374**

| Patent document cited in search report | | | Publication date (day/month/year) | Patent family member(s) | | | Publication date (day/month/year) |
|---|---|---|---|---|---|---|---|
| JP | 2019-140630 | A | 22 August 2019 | JP | 7076221 | B2 | 27 May 2022 |
| KR | 10-2021-0156844 | A | 27 December 2021 | CN | 114208168 | A | 18 March 2022 |
| | | | | EP | 3975563 | A1 | 30 March 2022 |
| | | | | JP | 2022-536766 | A | 18 August 2022 |
| | | | | US | 2022-0377370 | A1 | 24 November 2022 |
| | | | | WO | 2020-251338 | A1 | 17 December 2020 |
| KR | 10-2019-0057433 | A | 28 May 2019 | CN | 103229507 | B | 08 September 2017 |
| | | | | CN | 107801023 | A | 13 March 2018 |
| | | | | CN | 107801035 | A | 13 March 2018 |
| | | | | CN | 107801035 | B | 03 November 2020 |
| | | | | CN | 107801036 | A | 13 March 2018 |
| | | | | CN | 107801037 | A | 13 March 2018 |
| | | | | DK | 2645715 | T3 | 17 February 2020 |
| | | | | EP | 3923579 | A1 | 15 December 2021 |
| | | | | EP | 3923579 | B1 | 04 January 2023 |
| | | | | ES | 2765023 | T3 | 05 June 2020 |
| | | | | ES | 2898947 | T3 | 09 March 2022 |
| | | | | HU | E056945 | T2 | 28 March 2022 |
| | | | | JP | 2014-501090 | A | 16 January 2014 |
| | | | | JP | 2017-017739 | A | 19 January 2017 |
| | | | | JP | 2023-001330 | A | 04 January 2023 |
| | | | | JP | 7177193 | B2 | 22 November 2022 |
| | | | | KR | 10-1478959 | B1 | 06 January 2015 |
| | | | | KR | 10-1505755 | B1 | 24 March 2015 |
| | | | | KR | 10-1981711 | B1 | 24 May 2019 |
| | | | | KR | 10-2017-0118224 | A | 24 October 2017 |
| | | | | KR | 10-2021-0062102 | A | 28 May 2021 |
| | | | | KR | 10-2022-0028171 | A | 08 March 2022 |
| | | | | KR | 10-2367972 | B1 | 25 February 2022 |
| | | | | KR | 10-2483459 | B1 | 30 December 2022 |
| | | | | MX | 2013005754 | A | 01 August 2013 |
| | | | | PL | 2645715 | T3 | 30 April 2020 |
| | | | | PL | 3595303 | T3 | 31 January 2022 |
| | | | | PT | 2645715 | T | 29 January 2020 |
| | | | | US | 10080021 | B2 | 18 September 2018 |
| | | | | US | 10687063 | B2 | 16 June 2020 |
| | | | | US | 10972736 | B2 | 06 April 2021 |
| | | | | US | 2013-0142259 | A1 | 06 June 2013 |
| | | | | US | 2017-0332078 | A1 | 16 November 2017 |
| | | | | US | 2019-0238852 | A1 | 01 August 2019 |
| | | | | US | 2020-0288137 | A1 | 10 September 2020 |
| | | | | US | 9661324 | B2 | 23 May 2017 |
| | | | | WO | 2012-070857 | A2 | 31 May 2012 |
| | | | | WO | 2012-070857 | A3 | 19 July 2012 |
| KR | 10-2019-0054082 | A | 21 May 2019 | BR | 112019006304 | A2 | 02 July 2019 |
| | | | | CA | 3034925 | A1 | 05 April 2018 |
| | | | | CN | 109792531 | A | 21 May 2019 |
| | | | | EP | 3520410 | A1 | 07 August 2019 |
| | | | | JP | 2019-533363 | A | 14 November 2019 |
| | | | | TW | 201824863 | A | 01 July 2018 |

Form PCT/ISA/210 (patent family annex) (July 2022)

31

**INTERNATIONAL SEARCH REPORT**
Information on patent family members

International application No.

**PCT/KR2022/021374**

| Patent document cited in search report | Publication date (day/month/year) | Patent family member(s) | | | Publication date (day/month/year) |
|---|---|---|---|---|---|
| | | US | 10462462 | B2 | 29 October 2019 |
| | | US | 2018-0091816 | A1 | 29 March 2018 |
| | | US | 2020-0029091 | A1 | 23 January 2020 |
| | | WO | 2018-064524 | A1 | 05 April 2018 |
| WO 2019-150411 A1 | 08 August 2019 | None | | | |

Form PCT/ISA/210 (patent family annex) (July 2022)